# EUROPEAN PATENT SPECIFICATION

(11) **EP 3 520 601 B1**
(45) Date of publication and mention of the grant of the patent: **15.07.2020**
(21) Application number: 18155293.6
(22) Date of filing: 06.02.2018
(51) Int. Cl.: A01G 9/04, A01G 27/06

(54) **TRAY SYSTEM FOR GROWING AND TRANSPORTING PLANTS**
SCHALENSYSTEM ZUM ZÜCHTEN UND TRANSPORTIEREN VON PFLANZEN
SYSTÈME À PLATEAU POUR LA CULTURE ET LE TRANSPORT DE PLANTES

(43) Date of publication of application: 07.08.2019
(73) Proprietor: Adviesbureau in de Sierteelt Johan Vanderhaegen BVBA, 9770 Kruishoutem (BE)
(72) Inventor: VANDERHAEGEN, Johan, 9770 Kruishoutem (BE)
(74) Representative: De Clercq & Partners

(56) References cited:
- CN-U- 203 226 114
- US-A- 2 691 245
- US-A1- 2015 289 461
- US-A1- 2017 020 093

## Description

### TECHNICAL FIELD

The present invention is situated in the horticultural field. The invention relates to a one-piece tray system, and use thereof for growing and/or transporting plants. The invention likewise relates to a kit of parts and an assembly comprising the one-piece tray system and a plant pot. The invention likewise relates to a method for growing and/or transporting plants.

### TECHNOLOGICAL BACKGROUND OF THE INVENTION

Proper irrigation of soil or other plant growing medium is important in achieving optimal conditions for successful plant culture. However, most consumers of potted plants (green or flowering plants) do not have the exact notion of the amount of water that should be given to these plants to make them last, develop their vegetation and obtain their flowering. On the other hand, consumers do not always have the opportunity to water their plants on a regular basis. Insufficient watering causes insufficient development or even drought stress and eventually death of the plant. Too much watering causes, if the soil remains wet, rotting of the roots and, again, the withering away and the death of the plant. Therefore, diverse irrigation systems have been developed allowing controlled moistening of growth medium of plants.

In these systems, pads and/or wicks of absorbent material are used to transmit water by capillary action from a water storage tank to plant medium. These systems are often industrial systems, which are unsuited for retail and/or e-commerce, and which are unsatisfactory for home use by consumers. Further these systems are often composed of multiple pieces, thereby making it troublesome to use, assemble and/or transport these systems.

State of the art tray systems are known from US 2 691 245 A, CN 203 226 114 U, US 2015/0289461 A1, US 2017/0020093 A1.

In view thereof, there remains a need in the art or further and/or improved systems and methods for growing and/or transporting plants.

### SUMMARY

In a first aspect, the invention relates to a one-piece tray system for growing and/or transporting plants, comprising:
- a tray comprising a bottom and an upstanding peripheral wall;
- a supporting element attached to the bottom on the inside of the tray, the supporting element comprising a supporting surface parallel to the bottom of the tray, wherein the height of the supporting element is less than the height of the peripheral wall; and
- a capillary element attached to the bottom on the inside of the tray, the capillary element comprising an upper capillary part and a lower capillary part, the upper capillary part extending above the supporting surface and the lower capillary part extending below the supporting surface, wherein the capillary element comprises a groove configured for capillary action from the lower capillary part to the upper capillary part.

In contrast to existing systems, the one-piece tray system illustrating the present invention is handy, user friendly and ready-to-go, while at the same time allowing to water plants in an easy and controlled way. The present tray system is cheap and can easily be made using standard techniques. Further, the tray system illustrating the present invention can be transported without difficulty. The present tray system can be a decorative item and can be directly used in large retail, small retail and/or in-house. The present tray system further allows an easy packaging and presentation of plants, resulting in an attractive sales item. Consequently, the present tray system is well designed for e-commerce.

In certain embodiments, the upper capillary part comprises a clickable element.

In certain embodiments, the height of the supporting element is at least 1 mm less than the height of the peripheral wall.

In certain embodiments, the height of the upper capillary part is at least 3 mm.

In certain embodiments, the supporting element is positioned perpendicular to the bottom of the tray and/or the capillary element is positioned perpendicular to the bottom of the tray.

In certain embodiments, the groove extends:
- along the longitudinal axis of the capillary element;
- from the lower capillary part to the upper capillary part;
- from the bottom on the inside of the tray to the upper capillary part, and/or
- from the lower capillary part to the upper capillary part along at least 80%, along at least 90%, or along 100% of the height of the capillary element.

In certain embodiments, the groove is vertical.

In certain embodiments, the groove is:
- a slit, preferably wherein the slit is rectangular and has a width of 0.5 mm to 2.3 mm;
- a tube, preferably wherein the tube is cylindrical and has a diameter of 0.5 mm to 2.3 mm; and/or
- a depression, preferably wherein the depression is cylindrical and has a diameter of 0.5 to 2.3 mm, optionally wherein at least 5% of the circumference of the depression opens to the surroundings.

In certain embodiments, the supporting element and the capillary element are part of one capillary unit or are separate elements; preferably wherein the supporting element and the capillary element are part of one capillary unit.

In certain embodiments, the tray system is made from a non-porous material; preferably wherein the non-porous material is chosen from the group consisting of plastic, metal, polymer, and composite material.

In a further aspect, the invention relates to a kit of parts comprising a tray system as defined herein, and a plant pot comprising a bottom having an opening, wherein the opening of the plant pot is configured for receiving the upper capillary part.

The present kit of parts allows trouble-free transport of the one-piece tray system and plant pots, which can be separately transported and easily assembled on site, e.g. in the shop, into a decorative assembly for sale to the consumers.

A further aspect relates to an assembly comprising a tray system as defined herein, and a plant pot as defined herein, wherein the upper capillary part is inserted into the opening of the plant pot, and the bottom of the plant pot rests on the supporting surface.

In certain embodiments,
- the plant pot is an ornamental pot for decoration purposes;
- the plant pot is a growth pot for cultivating plants;
- the plant pot comprises growth medium;
- the plant pot comprises a plant;
- the kit of parts or the assembly further comprises a packaging; and/or
- the kit of parts or the assembly further comprises general information and/or usage instructions for growing and/or transporting the plant.

The present assembly allows transport without difficulty since the upper capillary element of the tray system is inserted into an opening of the plant pot, thereby keeping the plant pot in place. The present assembly forms a decorative item and can directly be used in large retail, small retail and/or in-house. The present assembly further allows an easy packaging and presentation of plants, resulting in an attractive sales item, which is also well-designed for e-commerce.

A further aspect relates to a method for growing and/or transporting a plant, comprising the steps of:
- providing a tray system as defined herein;
- providing a plant pot as defined herein, the plant pot comprising a plant;
- placing the plant pot onto the tray system by inserting the upper capillary part through the opening of the plant pot; and
- growing and/or transporting the plant.

A further aspect relates to the use of a tray system as defined herein, for growing and/or transporting plants.

### BRIEF DESCRIPTION OF THE DRAWINGS

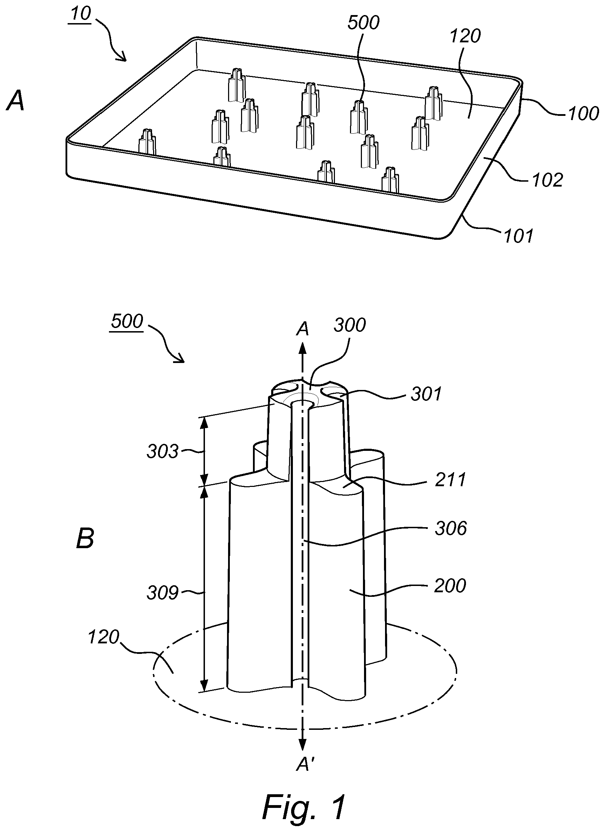

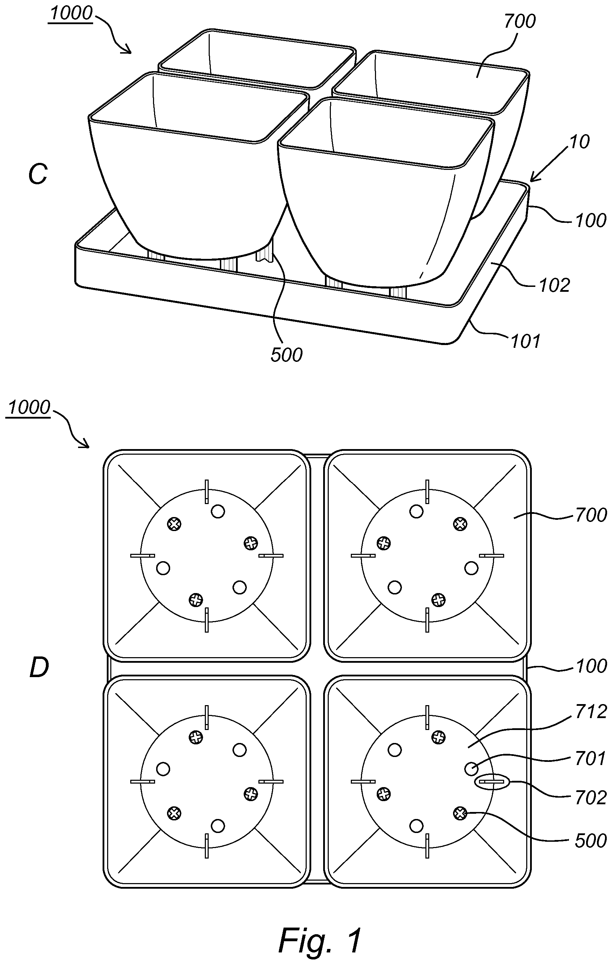

**Fig. 1A** schematically represents a 3D side view of a tray system (10) according to an embodiment of the invention. **Fig. 1B** schematically represents a detailed view of a capillary unit (500) according to an embodiment of the invention. **Fig. 1C** schematically represents a 3D side view of an assembly (1000) according to an embodiment of the invention. **Fig. 1D** schematically represents a 3D top view of an assembly (1000) according to an embodiment of the invention.

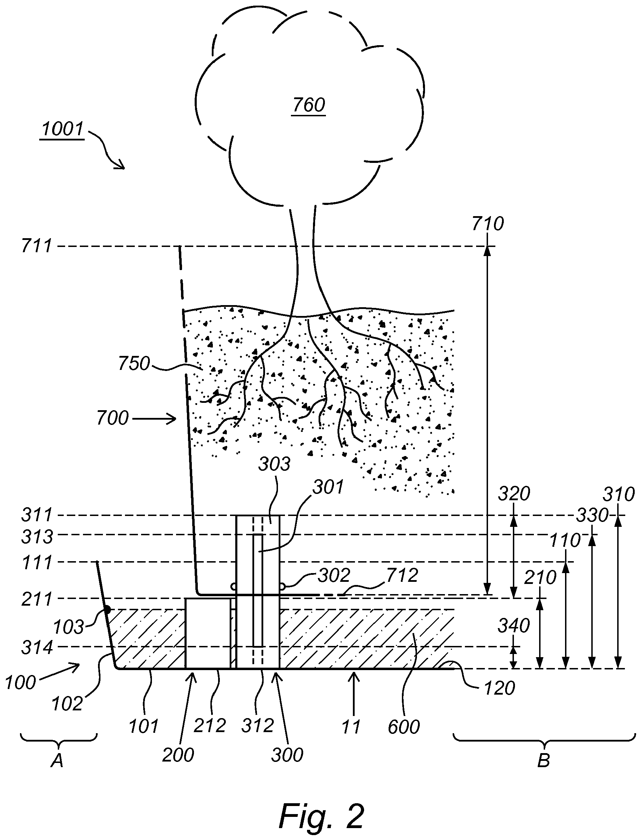

**Fig. 2** schematically represents a longitudinal cross section of part of an assembly (1001) according to an embodiment of the invention.

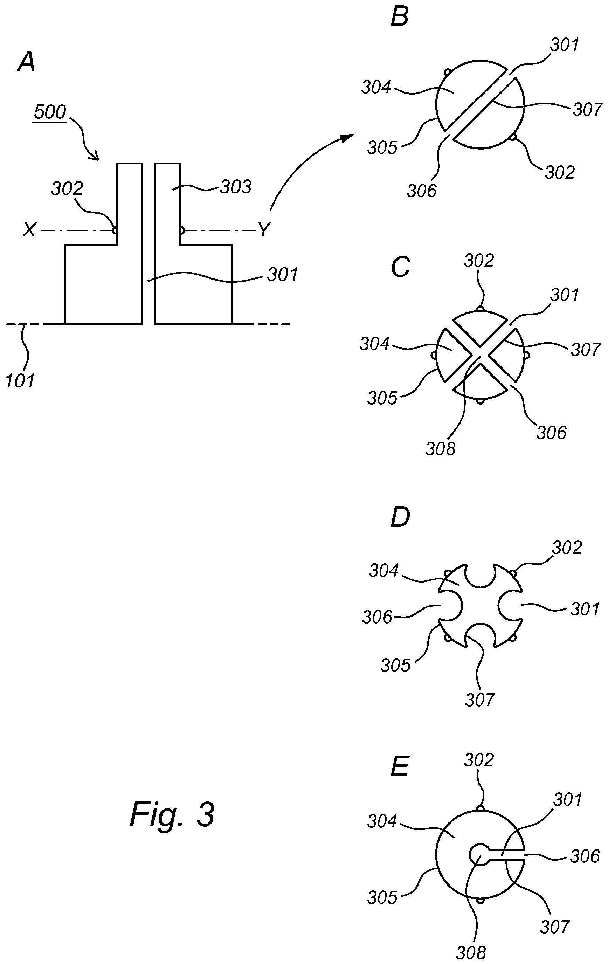

**Fig. 3A** schematically represents a longitudinal cross section of a capillary unit (500) comprising a capillary element and supporting elements attached to the bottom (101) on the inside of a tray system according to an embodiment of the invention. **Fig. 3B** schematically represents cross section XY of the capillary element as shown in Fig. 3A. **Fig. 3C-E** schematically represent cross sections of different capillary elements of tray systems according to embodiments of the invention.

In the present specification, the following numbering is used:
10, 11 - tray system;
100 - tray; 101 - bottom of the tray; 102 - upstanding peripheral wall; 103 - mark; 110 - height of peripheral wall; 111 - top surface of the peripheral wall; 120 - inner side of bottom of the tray;
200 - supporting element; 210 - height of supporting element; 211 - supporting surface; 212 - bottom surface of the supporting element;
300 - capillary element; 301 - groove; 302 - clickable element; 303 - upper capillary part; 304 - body of the capillary element; 305 - outer surface of the capillary element; 306 - opening of groove; 307 - inner surface of groove; 308 - middle of capillary element; 309 - lower capillary part; 310 - height of capillary element; 311 - top surface of the capillary element; 312 - bottom surface of the capillary element; 313 - top surface of the groove; 314 - bottom surface of the groove; 320 - difference in height between capillary and supporting element; 330 - height of the top of the groove; 340 - height of the bottom of the groove;
500 - capillary unit;
600 - water and/or nutrients;
700 - plant pot; 701 - opening in bottom of plant pot; 702 - stacking lugs on inside of plant pot; 710 - height of plant pot; 711 - top surface of the plant pot; 712 - bottom of the plant pot; 750 - plant medium; 760 - plant material;
1000, 1001 - assembly;
A-A' - longitudinal axis of the capillary element.

### DETAILED DESCRIPTION

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The terms also encompass "consisting of" and "consisting essentially of", which enjoy well-established meanings in patent terminology.

The recitation of numerical ranges by endpoints includes all numbers and fractions subsumed within the respective ranges, as well as the recited endpoints.

The terms "about" or "approximately" as used herein when referring to a measurable value such as a parameter, an amount, a temporal duration, and the like, are meant to encompass variations of and from the specified value, such as variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

It is noted that values are rounded to the nearest one. For example, 8.1 mm, 8.2 mm, 8.3 mm, and 8.4 mm is rounded down to 8 mm, while 8.5 mm, 8.6 mm, 8.7 mm, 8.8 mm, and 8.9 mm is rounded up to 9 mm. Reference to a value not followed by any decimal place also particularly comprises that same value followed by 0 at the first decimal place, e.g., reference to 8 mm particularly encompasses 8.0 mm.

The symbol "≥" refers to "at least"; "≤" refers to "at most". In the ranges given, upper and lower levels may be swapped broadening or limiting the ranges.

Whereas the terms "one or more" or "at least one", such as one or more members or at least one member of a group of members, is clear per se, by means of further exemplification, the term encompasses inter alia a reference to any one of said members, or to any two or more of said members, such as, e.g., any ≥3, ≥4, ≥5, ≥6 or ≥7 etc. of said members, and up to all said members. In another example, "one or more" or "at least one" may refer to 1, 2, 3, 4, 5, 6, 7 or more.

Unless otherwise defined, all terms mentioned in the description, inclusive of technical and scientific terms, have the meaning as is commonly understood by a person skilled in the art. As a further guideline, definitions are included for further clarification of terms which are used in the description of the invention. Figures give a schematic representation of possible embodiments of the invention with reference of the most frequently used terms.

### Tray system

In a first aspect, the invention provides a one-piece tray system for growing and/or transporting plants, comprising: a tray comprising a bottom and an upstanding peripheral wall; a supporting element attached to the bottom on the inside of the tray, the supporting element comprising a supporting surface parallel to the bottom of the tray, wherein the height of the supporting element is less than the height of the peripheral wall; and a capillary element attached to the bottom on the inside of the tray, the capillary element comprising an upper capillary part and a lower capillary part, the upper capillary part extending above the supporting surface and the lower capillary part extending below the supporting surface, wherein the capillary element comprises a groove configured for capillary action from the lower capillary part to the upper capillary part.

The term "tray system" refers to a regularly interacting or interdependent group of items comprising a tray forming a unified whole.

The term "one-piece" refers to consisting of or made in a single undivided piece or part. The tray system may be a molded article, for instance molded from a single material. Preferably, the material is non-porous, sturdy for transport and having a low elasticity.

In certain embodiments, the tray system may be made from a non-porous material. In certain embodiments, the tray, the supporting element and the capillary element are made from a non-porous material. Preferably, the non-porous material is chosen from the group consisting of plastic, metal, polymer, and composite material. The present tray system is cheap and can easily be made using common materials.

With the term "non-porous" is also meant "impervious", "non-absorbent", "waterproof", watertight" or "solid".

Examples of plastic are high density polyethylene (HDPE), K-Resin SBC plastic (K-SBC), low density polyethylene (LDPE), Post-Consumer Resin (PCR), polyethylene terephthalate (PET), polypropylene (PP), polystyrene (PS), polyvinyl chloride (PVC), and other plastics including acrylic and polycarbonate. The metal may be aluminum. A polymer is a chemical compound or mixture of compounds formed by polymerization and consisting essentially of repeating structural units. A composite material is a material made of two or more constituent materials with significantly different physical of chemical properties that, when combined, produce a material different from the individual components. An example of composite material may be reinforced plastics, ceramic matrix composites, metal matrix composites, gel-coated fiberglass or other advanced composite materials.

The material used to make the tray system may comprise at least one compound making the tray system non-porous or impermeable. In addition, the material used to make the tray system is preferably semi-flexible or rigid. In certain embodiments, the tray system may be made from a material having a low elasticity. The present tray system may be a rigid structure. This advantageously allows easy transport of the tray system. The present tray system and/or plant pot may be made from bio-degradable materials. The present tray system can easily be made using standard techniques for instance using malls.

When liquid is added to a tray system as taught herein, it is led through the groove of the capillary element. Preferably, the tray system including the body of the capillary element and thus also the inner surface of the groove is impermeable for liquids. In addition, it is further advisable to make the supporting element and the tray from non-porous material to prevent leakage and allowing the production of long-lasting systems.

Capillary action comes about as a consequence of both the adhesive forces between the liquid and the groove and the surface tension of the liquid. If the force of cohesion is greater than the force of adhesion, the liquid will cling to itself and will tend to form droplets when placed on a smooth surface instead of spreading out to wet the surface. Therefore, the body of the capillary element and thus also the inner surface of the groove is preferably made from material with a smooth surface.

### Tray

The term "tray" as used herein refers to a receptacle with a bottom and an upstanding peripheral wall. A tray may be used for carrying, holding, or displaying articles, such as plant pots as defined herein.

The examples focus on a tray system, wherein the tray has a square shape. The findings can, however, be easily adapted to trays having a different shape, such as trays having round shape, rectangular shape, oval shape, a polygonal shape, a multifaceted shape, a hexagonal shape, an octagonal shape, or combinations thereof.

Preferably, the bottom of the tray is flat and/or horizontal when positioned on the ground, table and/or other horizontal surface. The bottom of the tray is surrounded by the peripheral wall. The term "upstanding" also embraces "raised". The term "peripheral" refers to "on the edge" or "on the periphery" or "on the external surface". The term "wall" also embraces "edge" or "rim".

The thickness of the bottom and/or peripheral wall may be the identical, similar or different from each other. The thickness of the bottom and/or peripheral wall may be ≥ 0.5 mm. For instance, the thickness of the bottom and/or peripheral wall can range from 0.5 mm to 50 millimeters (mm) (5 cm), from 0.5 mm to 40 mm (4 cm); from 0.5 mm to 30 mm (3 cm), from 0.5 mm to 20 mm (2 cm); from 0.5 mm to 10 mm (1 cm); for instance ≥ 0.6 mm and/or ≤ 9 mm; ≥ 0.7 mm and/or ≤ 8 mm; ≥ 0.8 mm and/or ≤ 7 mm; ≥ 0.9 mm and/or ≤ 6 mm; ≥ 1 mm and/or ≤ 5 mm; ≥ 1 mm and/or ≤ 4 mm; ≥ 1 mm and/or ≤ 3 mm; or ≥ 1 mm and/or ≤ 2 mm.

The bottom of the tray may have any suitable shape, such as square, round, rectangular, oval, polygonal, multifaceted, hexagonal, octagonal, or a combination thereof. When the bottom of the tray has corners, the corners may be rounded.

The bottom of the tray may have any suitable dimension, such as length and width, or diameter. The largest distance between two points of the bottom may be ≥ 50 mm (5 cm). For instance, the largest distance between two points of the bottom of the tray can range from 100 mm (10 cm) to 1000 mm (1 m); for instance ≥ 120 mm (12 cm) and/or ≤ 900 mm (90 cm); ≥ 130 mm (13 cm) and/or ≤ 800 mm (80 cm); ≥ 140 mm (14 cm) and/or ≤ 700 mm (70 cm); ≥ 150 mm (15 cm) and/or ≤ 600 mm (60 cm); ≥ 160 mm (16 cm) and/or ≤ 500 mm (50 cm); ≥ 170 mm (17 cm) and/or ≤ 400 mm (40 cm); ≥ 180 mm (18 cm) and/or ≤ 300 mm (30 cm); or ≥ 200 mm (20 cm) and/or ≤ 250 mm (25 cm).

The peripheral wall may have any suitable height. The height of peripheral wall may be ≥ 3 mm. For instance, the height of the peripheral wall can range from 3 mm to 500 mm (50 cm), from 3 mm to 400 mm (40 cm), from 3 mm to 300 mm (30 cm); for instance ≥ 4 mm and/or ≤ 250 mm (25 cm); ≥ 5 mm and/or ≤ 200 mm (20 cm); ≥ 6 mm and/or ≤ 150 mm (15 cm), ≥ 7 mm and/or ≤ 100 mm (10 cm), ≥ 8 mm and/or ≤ 90 mm (9 cm); ≥ 9 mm and/or ≤ 80 mm (8 cm); ≥ 10 mm (1 cm) and/or ≤ 70 mm (7 cm); ≥ 20 mm (2 cm) and/or ≤ 60 mm (6 cm); ≥ 30 mm (3 cm) and/or ≤ 50 mm (5 cm); or ≥ 30 mm (3 cm) and/or ≤ 40 mm (4 cm).

In certain embodiments, the peripheral wall tray stands perpendicular or obliquely to the bottom of the tray. If obliquely, the angle between the peripheral wall and the bottom of the tray can measure from 90 degrees (°) to 135°; for instance ≥ 95° and/or ≤ 130°; ≥ 100° and/or ≤ 125°; ≥ 105° and/or ≤ 120°; or ≥ 110° and/or ≤ 115°.

In certain embodiments, the height of the upstanding peripheral wall may be higher than the top surface of the capillary element. In certain embodiments, the height of the upstanding peripheral wall may be higher than the top surface of the plant pot. In the latter embodiment, the plant pot is not visible when inserted in the tray system, thereby allowing the use of a simple, typically cheap, growth pot for cultivating plants.

In certain embodiments, a mark may be present at the inside of the upstanding peripheral wall. The mark may indicate the level till where water can be added to the tray, so that the water level stays below the supporting surface of the supporting element. Preferably, the mark is present on the inside of the peripheral wall at a height below the height of the supporting surface. The mark may be 3-dimensional or a color mark.

### Supporting element

The supporting element is attached to the bottom on the inside of the tray. With the term "attached" is meant "joined", "coupled", "linked" or "fastened". Preferably, the attachment is permanent or non-removable.

The height of the supporting element (along the longitudinal axis) may be ≥ 2 mm. The height of the supporting element is not limited as long as it is lower than the height of the peripheral wall. For instance, the height of the supporting element can range from 2 mm to 200 mm; for instance ≥ 2 mm and/or ≤ 150 mm; ≥ 2 mm and/or ≤ 100 mm; ≥ 3 mm and/or ≤ 90 mm; ≥ 4 mm and/or ≤ 80 mm; ≥ 5 mm and/or ≤ 70 mm; ≥ 6 mm and/or ≤ 60 mm; ≥ 7 mm and/or ≤ 50 mm; ≥ 8 mm and/or ≤ 40 mm; ≥ 9 mm and/or ≤ 30 mm; ≥ 10 mm and/or ≤ 25 mm; ≥ 10 mm and/or ≤ 20 mm; or ≥ 10 mm and/or ≤ 15 mm.

The height of the supporting element is less than the height of the peripheral wall. In certain embodiments, the height of the supporting element may be at least 1 mm less than the height of the peripheral wall. In certain embodiments, the height of the supporting element may be from 1 mm to 490 mm less than the height of the peripheral wall. For instance, the height of the supporting element may be ≥ 1 mm and/or ≤ 450 mm less than the height of the peripheral wall, for instance the height of the supporting element may be ≥ 1 mm and/or ≤ 400 mm, ≥ 1 mm and/or ≤ 350 mm, ≥ 1 mm and/or ≤ 300 mm, or ≥ 1 mm and/or ≤ 250 mm; for instance ≥ 1 mm and/or ≤ 200 mm; ≥ 1 mm and/or ≤ 150 mm; or ≥ 1 mm and/or ≤ 100 mm; for instance ≥ 1 mm and/or ≤ 90 mm, ≥ 1 mm and/or ≤ 80 mm, ≥ 1 mm and/or ≤ 70 mm, ≥ 1 mm and/or ≤ 60 mm, ≥ 1 mm and/or ≤ 50 mm, ≥ 1 mm and/or ≤ 40 mm, ≥ 1 mm and/or ≤ 30 mm; ≥ 1 mm and/or ≤ 20 mm; ≥ 1 mm and/or ≤ 10 mm; ≥ 1 mm and/or ≤ 9 mm, ≥ 1 mm and/or ≤ 8 mm, ≥ 1 mm and/or ≤ 7 mm, ≥ 1 mm and/or ≤ 6 mm, ≥ 1 mm and/or ≤ 5 mm, ≥ 1 mm and/or ≤ 4 mm, ≥ 1 mm and/or ≤ 3 mm, or ≥ 1 mm and/or ≤ 2 mm, less than the height of the peripheral wall.

The supporting elements may have a cylindrical, rectangular, prism, cuboid, pyramid, triangular, pin or conical structure, or any combination thereof.

The supporting element comprises a supporting surface parallel to the bottom of the tray.

The term "supporting surface" as used herein refers to a structure configured for supporting the bottom of a plant pot. The supporting surface may be formed by a single point or surface. The supporting surface corresponds to the top surface of the supporting element.

The supporting surface may have a shape chosen from the group consisting of a point, a round shape, an oval shape, a linear shape, a polygonal shape, a cross shape, a multifaceted shape, a square shape, a rectangular shape, a hexagonal shape, an octagonal shape, and a combination thereof.

The shape of the supporting surface and the shape of the bottom surface of the supporting element may be identical, similar or different from each other.

The supporting surface and/or the bottom surface of the supporting element may have any suitable dimension, such as length and width, or diameter. The largest distance between two points of the supporting surface may be ≥ 1 mm. For instance, the largest distance between two points of the supporting surface can range from 1 mm to 30 mm; for instance ≥ 2 mm and/or ≤ 25 mm; ≥ 3 mm and/or ≤ 20 mm; ≥ 4 mm and/or ≤ 15 mm; or ≥ 5 mm and/or ≤ 10 mm; for instance ≥ 6 mm and/or ≤ 9 mm; for instance ≥ 7 mm and/or ≤ 8 mm. The same applies to the bottom surface of the supporting element.

The wording "the largest distance between two points of the supporting surface" refers to the largest distance between two points extending from one side of the longitudinal outer surface to the other side of the longitudinal outer surface of the supporting surface of one supporting element.

The tray system may comprise one or more supporting elements, for instance two or more, three or more, four or more, five or more, six or more, seven or more, eight or more, nine or more, ten or more, eleven or more, or twelve or more supporting elements. The tray system may comprise from 1 to 500 supporting elements; for instance ≥ 1 and/or ≤ 400; ≥ 1 and/or ≤ 300; ≥ 1 and/or ≤ 200; ≥ 1 and/or ≤ 100; ≥ 1 and/or ≤ 90; ≥ 1 and/or ≤ 80; ≥ 1 and/or ≤ 70; ≥ 1 and/or ≤ 60; ≥ 1 and/or ≤ 50; ≥ 1 and/or ≤ 40; ≥ 1 and/or ≤ 30; ≥ 1 and/or ≤ 20; or ≥ 1 and/or ≤ 10 supporting elements.

Preferably, when more than one supporting element is present, the supporting elements have the same height, so that the supporting surfaces together form a horizontal surface for keeping the plant pot in an upright position.

### Capillary element

The "capillary element" is attached to the bottom on the inside of the tray. Preferably, the attachment is permanent or non-removable.

The capillary element comprises an upper capillary part and a lower capillary part, the upper capillary part extending above the supporting surface (of the supporting element) and the lower capillary part extending below the supporting surface (of the supporting element).

The height of the capillary element (along the longitudinal axis) may be ≥ 5 mm. As illustrated in the example section, such capillary elements are effective for capillary action. The longer the capillary element, the higher the stability effect will be to keep the plant pot onto the tray system. The height of the capillary element has no upper limit as long as it is lower than the top surface of the plant pot when clicked onto the tray system. In certain embodiments, the height of the capillary element can range from 5 mm to 200 mm; for instance ≥ 5 mm and/or ≤ 150 mm; ≥ 5 mm and/or ≤ 100 mm; ≥ 10 mm and/or ≤ 50 mm; ≥ 15 mm and/or ≤ 40 mm; ≥ 20 mm and/or ≤ 35 mm; or ≥ 25 mm and/or ≤ 30 mm.

In certain embodiments, the height of the capillary element is ≥ 23 mm (2.3 cm). In certain embodiments, the height of the capillary element can range from 23 to 200 mm; for instance ≥ 23 mm and/or ≤ 150 mm; ≥ 23 mm and/or ≤ 100 mm; ≥ 23 mm and/or ≤ 50 mm; ≥ 23 mm and/or ≤ 40 mm; ≥ 23 mm and/or ≤ 35 mm; ≥ 23 mm and/or ≤ 30 mm, or ≥ 23 mm and/or ≤ 25 mm.

The capillary elements may have a cylindrical, rectangular, prism, cuboid, pyramid, triangular, pin or conical structure, or any combination thereof. Preferably, the capillary element has a cylindrical structure.

The (general structure of the) top surface and/or bottom surface of the capillary element may have a shape chosen from the group consisting of a round shape, an oval shape, a linear shape, a polygonal shape, a cross shape, a multifaceted shape, a square shape, a rectangular shape, a hexagonal shape, an octagonal shape, and a combination thereof. The top surface and/or bottom surface of the capillary element is preferably round.

The shape of the top surface and the shape of bottom surface of the capillary element may be identical, similar or different from each other.

The top surface and/or bottom surface of the capillary element may have any suitable dimension, such as length and width, or diameter. The largest distance between two points of the top surface of the capillary element may be ≥ 5 mm. For instance, the largest distance between two points of the top surface of the capillary element can range from 5 mm to 30 mm; for instance ≥ 5 mm and/or ≤ 25 mm; ≥ 5 mm and/or ≤ 20 mm; ≥ 5 mm and/or ≤ 15 mm; or ≥ 5 mm and/or ≤ 10 mm; for instance ≥ 5 mm and/or ≤ 9 mm; ≥ 5 mm and/or ≤ 8 mm; ≥ 5 mm and/or ≤ 7 mm; or ≥ 5 mm and/or ≤ 6 mm. The same applies to the bottom surface of the capillary element.

In certain embodiments, the height of the upper capillary part is at least 3 mm. An upper capillary part having a height of 3 mm provides already an optimal watering. As indicated for the exemplary capillary elements herein, short upper capillary parts are as effective as long upper capillary parts. The longer the upper capillary part, the higher the stability effect for keeping the plant pot onto the tray system. In certain embodiments, the height of the upper capillary part can vary from 3 mm to 150 mm; for instance ≥ 3 mm and/or ≤ 100 mm; ≥ 3 mm and/or ≤ 50 mm; ≥ 3 mm and/or ≤ 40 mm; ≥ 3 mm and/or ≤ 30 mm; ≥ 3 mm and/or ≤ 20 mm; ≥ 3 mm and/or ≤ 10 mm; or ≥ 3 mm and/or ≤ 5 mm. Fixing of the plant pot onto the tray system is thus obtained by inserting the upper capillary part into an opening in the bottom of the plant pot. The presence of plant medium into the plant pot may further stabilize the so-obtained assembly.

Preferably, the upper capillary part is a rigid structure. Advantageously, the upper capillary part allows for an easy insertion into an opening or perforation of the bottom of the plant pot.

In certain embodiments, the height of the lower capillary part is the same as the height of the supporting element(s).

The tray system may comprise one or more capillary elements, for instance two or more, three or more, four or more, five or more, six or more, seven or more, eight or more, nine or more, ten or more, eleven or more, or twelve or more capillary elements. The tray system may comprise from 1 to 500 supporting elements; for instance ≥ 1 and/or ≤ 400; ≥ 1 and/or ≤ 300; ≥ 1 and/or ≤ 200; ≥ 1 and/or ≤ 100; ≥ 1 and/or ≤ 90; ≥ 1 and/or ≤ 80; ≥ 1 and/or ≤ 70; ≥ 1 and/or ≤ 60; ≥ 1 and/or ≤ 50; ≥ 1 and/or ≤ 40; ≥ 1 and/or ≤ 30; ≥ 1 and/or ≤ 20; or ≥ 1 and/or ≤ 10 capillary elements.

When more than one capillary element is present, the capillary elements may have identical, similar or different heights.

The supporting elements and/or the capillary elements may be scattered over the bottom on the inside of the tray or may show a distinct pattern.

In certain embodiments, the supporting element and/or the capillary element may be positioned perpendicular or obliquely to the bottom of the tray. The angle between the supporting element and the bottom of the tray can be from 90° to 135 degrees(°); for instance ≥ 95° and/or ≤ 130°; ≥ 100° and/or ≤ 125°; ≥ 105° and/or ≤ 120°; or ≥ 110° and/or ≤ 115°. The angle between the capillary element and the bottom of the tray can be from 90° to 135 degrees(°); for instance ≥ 95° and/or ≤ 130°; ≥ 100° and/or ≤ 125°; ≥ 105° and/or ≤ 120°; or ≥ 110° and/or ≤ 115°. Preferably, the angle between the supporting element and the bottom of the tray is 90° (perpendicular) and/or the angle between the capillary element and the bottom of the tray is 90°. This allows an easy assemblage and dis-assemblage of the assembly as taught herein. When the capillary elements are positioned straight compared to the bottom of tray, the plant pot can be easily put over the upper capillary part of the capillary elements. Therefore, one embodiment provides a tray system described herein, wherein the supporting element is positioned perpendicular to the bottom of the tray and/or the capillary element is positioned perpendicular to the bottom of the tray. When the capillary elements are obliquely positioned compared to the bottom of tray, the plant pot may be better fixed, however positioning of the plant pot onto the tray system may be more difficult to perform. With the term "perpendicular" is meant "vertical", "straight up", and "upright with right angels".

In certain embodiments, the supporting element and the capillary element are part of one capillary unit. The term "capillary unit" as used herein refers to an element or unit comprising at least one supporting element connected to a capillary element resulting in one physical structure. A tray system as taught herein comprising a capillary unit is shown in Fig. 1 and 3. In a capillary unit, the number of supporting elements surrounding the capillary element may be one or more, for instance varying from 1 to 10; for instance ≥ 1 and/or ≤ 8; for instance ≥ 1 and/or ≤ 6; for instance ≥ 1 and/or ≤ 4; for instance ≥ 1 and/or ≤ 2. For instance, the number of supporting elements surrounding the capillary element in a capillary unit may be four.

Accordingly, disclosed herein is a capillary unit comprising a supporting element and a capillary element, the supporting element comprising a supporting surface; and a capillary element comprising an upper capillary part and a lower capillary part, the upper capillary part extending above the supporting surface and the lower capillary part extending below the supporting surface, wherein the capillary element comprises a groove configured for capillary action from the lower capillary part to the upper capillary part.

In certain embodiments, the supporting element and the capillary element are separate elements. A tray system as taught herein comprising the supporting element and the capillary element as separate elements is shown in Fig. 2. When separate, the supporting elements may be positioned close to or within a certain distance from the capillary element. The distance between the capillary element and the supporting element may be ≥ 1 mm with no upper limit as long as in the assembly, the bottom of the plant pot rests on the supporting surface of the supporting element and the upper capillary part of the capillary element is inserted into the opening of the bottom of the plant pot. For instance, the distance between the capillary element and the supporting element may vary from 1 mm to 100 mm; for instance ≥ 1 mm and/or ≤ 90 mm; ≥ 1 mm and/or ≤ 80 mm; ≥ 1 mm and/or ≤ 70 mm; ≥ 1 mm and/or ≤ 60 mm; ≥ 1 mm and/or ≤ 50 mm; ≥ 1 mm and/or ≤ 40 mm; ≥ 1 mm and/or ≤ 30 mm; ≥ 1 mm and/or ≤ 20 mm; ≥ 1 mm and/or ≤ 10 mm; or ≥ 1 mm and/or ≤ 5 mm.

In certain embodiments, the number of supporting elements surrounding the capillary element may be one or more, for instance varying from 1 to 10; for instance ≥ 1 and/or ≤ 8; for instance ≥ 1 and/or ≤ 6; for instance ≥ 1 and/or ≤ 4; for instance ≥ 1 and/or ≤ 2. For instance, the number of supporting elements surrounding the capillary element may be four.

Preferably, the supporting element and the capillary element are part of one capillary unit. This allows production of the tray system as taught herein in an easy and economical way.

The capillary element comprises a groove configured for capillary action from the lower capillary part to the upper capillary part. The term "groove" embraces a "slit", "tube", "depression", "cut", "channel", "fissure", "gutter", "slot", and "cannellini" in a hard material. The groove allows the capillary transport of liquid substances, such as water and nutrients.

The terms "capillary action", "capillary transport", "capillarity", or "capillary motion" refer to the ability of a liquid to flow in narrow spaces without the assistance of, or even in opposition to, external forces like gravity. In the grooves of a capillary element, the flow of the liquid is preferably straight upwards.

The capillary element may comprise one or more grooves. For instance, the capillary element may comprise two or more, three or more, four or more, five or more, six or more, seven or more, eight or more, nine or more, ten or more, eleven or more, or twelve or more grooves. The upper limit of the number of grooves may be determined for instance by the size of the capillary element, the size of the groove(s), and the type of the groove(s).

In certain embodiments, the groove may extend:
- along the longitudinal axis of the capillary element;
- from the lower capillary part to the upper capillary part;
- from the bottom on the inside of the tray to the upper capillary part, and/or
- from the lower capillary part to the upper capillary part along at least 80%, along at least 90%, or along 100% of the height of the capillary element.

The bottom of the groove may extend to the bottom of the tray. Hence, the bottom surface of the groove may correspond to the bottom of the tray. Alternatively, the bottom (surface) of the groove may be above the bottom of the tray but below the supporting surface. When in an assembly, water may be added to the tray so that the water level stays under the supporting surface but above the bottom surface of the groove, and liquid can be transported through capillarity from the lower capillary part to the upper capillary part. Preferably, the bottom (surface) of the groove corresponds to the bottom of the tray. Hence, when liquid is running low water can still be transported by capillarity from the lower capillary part to the upper capillary part.

The top surface of the groove may extend to the top of the capillary element. Hence, the top surface of the groove may correspond to the top of the capillary element. Alternatively, the top (surface) of the groove may be below the top of the capillary element but above the supporting surface.

In certain embodiments, the groove extends from a height below the supporting surface to a height above the supporting surface. In certain embodiments, the groove extends from a height below the supporting surface to a height above the supporting surface along at least 80 percent (%) of the height of the capillary element. The groove may extend along at least 85%, at least 90%, at least 95%, at least 96%, at least 97%, at least 98%, at least 99%, or 100% of the height of the capillary element.

In certain embodiments, the groove may be vertical. With the term "vertical" is meant at right angles to a horizontal plane; or in a direction or having an alignment such that the top is directly above the bottom. The term also embraces "upright", "perpendicular", "standing", "upstanding".

The groove of the capillary element may have different structures, as long as liquid may be transferred through capillarity. Capillary transfer is optimal when the diameter, width and/or depth of the groove is from 0.5 mm to 2.3 mm; for instance ≥ 0.5 mm and/or ≤ 2.2 mm; ≥ 0.5 mm and/or ≤ 2.1 mm; ≥ 0.5 mm and/or ≤ 2.0 mm; ≥ 0.5 mm and/or :5 1.9 mm; ≥ 0.5 mm and/or ≤ 1.8 mm; ≥ 0.5 mm and/or ≤ 1.7 mm; ≥ 0.5 mm and/or ≤ 1.6 mm; or ≥ 0.5 mm and/or ≤ 1.5 mm; for instance ≥ 0.5 mm and/or ≤ 1.4 mm; ≥ 0.5 mm and/or ≤ 1.3 mm; ≥ 0.5 mm and/or ≤ 1.2 mm; ≥ 0.5 mm and/or ≤ 1.1 mm; or ≥ 0.5 mm and/or ≤ 1.0 mm. Such capillary element having a groove from 0.5 mm and 2.3 mm can also be easily produced.

In certain embodiments, the groove may be:
- a slit, preferably wherein the slit is rectangular and has a width of 0.5 mm to 2.3 mm;
- a tube, preferably wherein the tube is cylindrical and has a diameter of 0.5 mm to 2.3 mm; and/or
- a depression, preferably wherein the depression is cylindrical and has a diameter of 0.5 to 2.3 mm, optionally wherein at least 5% of the circumference of the depression opens to the surroundings.

In certain embodiments, the groove may be a slit.

The term "slit" as used herein refers to a cut extending from one side of the longitudinal outer surface to another side of the longitudinal outer surface of the capillary element. The slit may have any suitable shape, such as rectangular, cuboid, cylindrical, prism, pyramid, triangular, pin or conical structure, or any combination thereof. Preferably, the slit has a rectangular shape. The slit may cross the middle of the capillary element. The capillary element may comprise one or more slits, such as two or more slits, crossing each other in the body of the capillary element, e.g. in the middle of the capillary element. When two slits are present, the cross section may be cross-shaped. In addition to the opening at the longitudinal outer surface, the slit may open to the surroundings at the top of the upper capillary part. The bottom of the slit may extend to the bottom of the tray. Hence, the bottom surface of the slit may correspond to the bottom of the tray. Alternatively, the bottom (surface) of the slit may be above the bottom of the tray but below the supporting surface.

In certain embodiments, the groove may be a tube.

The term "tube" as used herein refers to a hollow elongated space or channel through the body of the capillary element. The tube may have any suitable shape, such as cylindrical, cuboid, rectangular, prism, pyramid, triangular, pin or conical structure, or any combination thereof. Preferably, the tube has a cylindrical shape. The tube may be localized at the middle or more at the side of the capillary element; preferable in the middle of the capillary element. The tube opens to the surroundings through one or more side openings in the lower capillary part at the longitudinal outer surface of the capillary element (e.g. near the bottom of the tray); and the tube opens to the surroundings through one or more side openings in the upper capillary part at the longitudinal outer surface of the capillary element (e.g. near the top of the upper capillary part) and/or at the top surface of the upper capillary part. The side openings may be made through one or more slits or cannula extending from the tube to the longitudinal outer surface of the capillary element. The number of side openings may vary from 1 to 20; for instance ≥ 1 and/or ≤ 15; ≥ 1 and/or ≤ 10; or ≥ 1 and/or ≤ 5, such as for instance 1, 2, 3, or 4 side slits.

With the term "body" is meant the solid matter of an element.

In certain embodiments, the groove may be a depression.

The term "depression" refers to a channel or incision along the longitudinal outer surface of the capillary element. The depression may have any suitable shape, such as cylindrical, cuboid, rectangular, prism, pyramid, triangular, pin or conical structure, or any combination thereof. Preferably, the depression has a cylindrical shape. In certain embodiments, at least 5% of the circumference of the depression opens to the surroundings. For instance, from 5% to 40% of the circumference of the depression opens to the surroundings; for instance ≥ 6% and/or ≤ 35%; ≥ 7% and/or ≤ 30%; ≥ 8% and/or ≤ 25%; ≥ 9% and/or ≤ 20%; ≥ 10% and/or ≤ 15% of the circumference of the depression opens to the surroundings. The depressions may be open to the surroundings along the longitudinal side or surface of the capillary element. In addition to the opening at the longitudinal outer surface, the depression may also be open at the top surface of the capillary element. The bottom of the depression may extend to the bottom of the tray. Hence, the bottom surface of the depression may correspond to the bottom of the tray. Alternatively, the bottom (surface) of the depression may be above the bottom of the tray but below the supporting surface.

In certain embodiments, the groove may have a width or diameter of 0.1 mm to 2.3 mm. In certain embodiments, the groove may have a width or diameter of 0.2 mm to 2.0 mm, 0.3 mm to 1.5 mm, 0.4 mm to 1.0 mm, 0.5 mm to 2.3 mm, or 0.5 mm to 2.0 mm. Capillary action depends on the width or diameter of the groove. The smaller the groove, the higher the capillary action within the capillary element (or groove). For instance, for a groove with a width or diameter of 0.5 mm, capillary action may be observed up to at least 60 mm in height. For a groove with a width or diameter of 1.0 mm, capillary action may be observed up to at least 30 mm in height. For a groove with a width or diameter of 2.0 mm, capillary action may be observed up to at least 14 mm in height. For a groove having a width or diameter above 2.3 mm, no further increase in capillary action may be observed.

In certain embodiments, the groove may a combination of a slit, a tube or a depression as defined herein.

### Clickable element

In certain embodiments, the upper capillary part may comprise, consist essentially of, or consist of a clickable element. This clickable element, in addition to the upper capillary part, aids to further fix and/or stabilize the plant pot onto the tray system, thereby resulting in a stably fixed assembly so that the plant pot cannot be released from the tray system during transport or other conditions.

The terms "clickable element", "click element" or "protruding element" can be used interchangeably. When present, the click element keeps the bottom of the plant pot between the click element and the supporting surface. When necessary, assemblies as taught herein can be easily disassembled by removing the plant pot from the tray system. The recovered tray systems can be reused.

In use, the circumference of the clickable element may be reduced when the upper capillary part is inserted in an opening of the plant pot. Once the bottom of the plant pot rests on the supporting element, the clickable element becomes located above the bottom the plant pot and the circumference of the clickable element may be restored. In resting position, the circumference of the clickable element may be larger than the circumference of the opening in the bottom of the plant pot. In compressed status, the circumference of the clickable element may be smaller than the circumference of the opening in the bottom of the plant pot.

The clickable element can have different structures, for instance, it may be a knob or a barb. The clickable element may also be formed by the upper capillary part. The shape of the clickable element may be chosen from curved, round, hart-shaped, or any other shape. Curved or round shapes are preferred as they allow an easier insertion into the opening of the bottom of the plant pot. The clickable element may be located close to the basis of the upper capillary part, on the middle of the upper capillary part, or up to the top of the capillary element. The clickable element may be present on the basis of the upper capillary part so that, when the plant pot is introduced on the tray system, the outside of the bottom of the plant pot is situated close to, and/or even touches, the supporting surface of the supporting element, and the inside of the bottom of the plant pot stands close to, and/or even touches, the clickable element.

When the clickable element is a knot or a barb, the clickable element may have a height, a width and/or a depth from 0.5 mm to 5 mm; for instance ≥ 0.5 mm and ≤ 4 mm, for instance ≥ 0.5 mm and ≤ 3 mm, for instance ≥ 0.5 mm and ≤ 2 mm, for instance ≥ 0.5 mm and ≤ 1 mm.

In certain embodiments, the clickable element may be attached to the upper capillary part. The thickness of the bottom of the plant pot determines the minimum distance between the clickable element and the supporting surface. For instance, for a plant pot having a bottom thickness of 1 mm; the distance between the height of the supporting surface and the lowest part of the clickable element should be ≥ 2 mm, e.g., the distance may vary from 2 mm to 10 mm; for instance ≥ 2 mm and ≤ 9 mm, ≥ 2 mm and ≤ 8 mm, ≥ 2 mm and ≤ 7 mm, ≥ 2 mm and ≤ 6 mm, ≥ 2 mm and ≤ 5 mm, ≥ 2 mm and ≤ 4 mm, or ≥ 2 mm and ≤ 3 mm.

The number of clickable elements may vary depending on the structure of the clickable element and on the structure of the upper capillary part. In certain embodiments, the clickable element may not overlap with an opening of a groove. For instance, the capillary element may comprise from 1 to 10 clickable elements; for instance from 1 to ≥ 1 and ≤ 9, for instance ≥ 1 and ≤ 8, for instance ≥ 1 and ≤ 7, for instance ≥ 1 and ≤ 6, for instance ≥ 1 and ≤ 5, for instance ≥ 1 and ≤ 4, for instance ≥ 1 and ≤ 3; for instance ≥ 1 and ≤ 2. When different clickable elements are present on one capillary element these preferably stand on the same height.

### Kit of parts

An aspect provides a kit of parts comprising a tray system described herein and a plant pot comprising a bottom having an opening, wherein the opening of the plant pot is configured for receiving the upper capillary part.

The term "opening" as used herein in the context of the plant pot also embraces the term "perforation". The number of openings in the bottom of the plant pot can vary and determines the number of capillary elements that the plant pot can receive from the tray system. In the bottom of the plant pot there is at least 1 opening present. For instance ≥ 1 and/or ≤ 20; for instance ≥ 1 and/or ≤ 10; for instance ≥ 1 and/or ≤ 5, ≥ 1 and/or ≤ 2 openings can be present.

Optimal watering conditions depends on the needs of the plant, and hence the number of openings in the bottom of the plant pot can be determined by the skilled person. In addition, the shape of the opening in the bottom surface of the plant pot may be chosen from the group consisting of a round shape, an oval shape, a linear shape, a point shape, a polygonal shape, a multifaceted, arbitrary or irregular shape, a square shape, a rectangular shape, a hexagonal shape, an octagonal shape, and combinations thereof. In addition, the size of the openings can range from 0.1 mm to 30 mm. The size and numbers of the openings can be adapted dependent on the size of the plant pot.

The tray system may carry one or more plant pot(s), preferably from 1 to 8 plant pots; for instance ≥ 1 and ≤ 6 plant pots, ≥ 1 and ≤ 5 plant pots, ≥ 1 and ≤ 4 plant pots, ≥ 1 and ≤ 3 plant pots, ≥ 1 and ≤ 2 plant pots. By its position, each plant pot may define onto the tray an area for carrying a plant pot.

The number of supporting elements carrying one plant pot may vary from 1 to 100; ≥ 1 and/or ≤ 50; for instance ≥ 1 and/or ≤ 20; for instance ≥ 1 and/or ≤ 10; ≥ 1 and/or ≤ 9; for instance ≥ 1 and/or ≤ 8; for instance ≥ 1 and/or ≤ 7; ≥ 1 and/or ≤ 6; for instance ≥ 1 and/or ≤ 5; for instance ≥ 1 and/or ≤ 4; ≥ 1 and/or ≤ 3; for instance ≥ 1 and/or ≤ 2. The "total supporting surface" refers to the surface for supporting or carrying one plant pot. This total supporting surface can be limited to a surface as small as a point up to 90% of the bottom surface of the plant pot. The total supporting surface of the supporting element may vary from 0.1% to 90% of the bottom surface of the plant pot; for instance ≥ 0.1% and/or ≤ 85%; ≥ 0.1% and/or ≤ 80%; ≥ 0.1% and/or ≤ 70%; ≥ 0.1% and/or ≤ 60%; ≥ 0.1% and/or ≤ 50%; ≥ 0.1% and/or ≤ 40%; ≥ 0.1% and/or ≤ 30%; ≥ 0.1% and/or ≤ 20%; ≥ 0.1% and/or ≤ 10%; ≥ 0.1% and/or ≤ 5%; ≥ 0.1% and/or ≤ 2%; or ≥ 0.1 and/or ≤ 1% of the bottom surface of the plant pot.

The number of capillary elements making contact with the one plant pot may vary from 1 to 100; for instance ≥ 1 and/or ≤ 50; ≥ 1 and/or ≤ 20; ≥ 1 and/or ≤ 10; ≥ 1 and/or ≤ 9; ≥ 1 and/or ≤ 8; ≥ 1 and/or ≤ 7; ≥ 1 and/or ≤ 6; ≥ 1 and/or ≤ 5; ≥ 1 and/or ≤ 4; ≥ 1 and/or ≤ 3; or ≥ 1 and/or ≤ 2.

In order to allow an easy insertion of the upper capillary part into the opening of the bottom of the plant pot, the shape of the cross section of the upper capillary part is preferably similar to the shape of the opening in the bottom surface of the plant pot. In addition, the circumference of the upper capillary part is preferably smaller than the opening of the plant pot. If a clickable element is present on the capillary element, the opening of the plant pot is preferably smaller than the circumference of the clickable elements but larger than the circumference of the upper capillary part. The (general) circumference of the upper capillary part is preferably round. Further, the upper capillary part may be needle-shaped. This allows to perforate the bottom of the plant pot when no openings are present in the bottom of the plant pot before applying the plant pot onto the tray system.

The tray system as taught herein is designed so that when a plant pot (possibly carrying plant material and plant medium) is combined with the tray system, the plant pot rests on the supporting surface and the upper capillary part becomes inserted into the bottom of the plant pot. In normal conditions, when water is added to the tray, the bottom of the plant pot does not make contact with the water due to its support onto the support surface. Water is then transmitted by capillary action from the tray system into the plant medium present in the plant pot. For optimal water supply, insertion of the capillary element into the plant medium only needs to be realized over a short distance (e.g. 3 mm or more); the use of a capillary element allowing a longer insertion within the plant medium results in a similar water supply.

The terms "pot" or "plant pot" embrace the terms "box", "container", "cultivation cell", and "basket". In certain embodiments, the pot can be filled with a limited quantity of plant medium. By "limited quantity" is meant 0.25-3 kg medium, more specifically 0.25 kilogram (kg), 0.5 kg, 0.75 kg, 1.0 kg, 1.25 kg, 1.5 kg, 1.75 kg, 2.0 kg, 2.25 kg, 2.5 kg, 2.75 kg or 3.0 kg.

The plant pot is not limiting for the use of the tray system as long as the positions of the openings in its bottom correspond with the positions of the upper capillary part of the tray system to be combined with. The openings can be pre-made in the bottom of the plant pot or made by perforation during the assembly of the tray system and the plant pot.

The plant pot may have any suitable shape, such as square, round, rectangular, oval, polygonal, multifaceted, hexagonal, octagonal, and combinations thereof. When the plant pot has corners, the corners may be rounded.

The plant pot may have any suitable thickness. The thickness of the plant pot may be ≥ 0.5 mm. For instance, the thickness of the plant pot can range from 0.5 mm to 50 millimeters (mm), from 0.5 mm to 40 mm; from 0.5 mm to 30 mm, from 0.5 mm to 20 mm; from 0.5 mm to 10 mm; for instance ≥ 0.6 mm and/or ≤ 9 mm; ≥ 0.7 mm and/or ≤ 8 mm; ≥ 0.8 mm and/or ≤ 7 mm; ≥ 0.9 mm and/or ≤ 6 mm; ≥ 1 mm and/or ≤ 5 mm; ≥ 1 mm and/or ≤ 4 mm; ≥ 1 mm and/or ≤ 3 mm; or ≥ 1 mm and/or ≤ 2 mm.

The plant pot may have any suitable height. For instance, the height of the plant pot can range from 3 cm to 50 cm, from 3 cm to 40 cm, from 3 cm to 30 cm; for instance ≥ 4 cm and/or ≤ 25 cm; ≥ 5 cm and/or ≤ 20 cm; ≥ 6 cm and/or ≤ 15 cm, ≥ 7 cm and/or ≤ 10 cm, or ≥ 8 cm and/or ≤ 9 cm. The bottom of the plant pot and the top surface of the plant pot may have any suitable dimension, such as length and width, or diameter.

In certain embodiments, the side walls of the plant pot may stand perpendicular or obliquely to the bottom of the plant pot. If obliquely, the angle between the side walls and the bottom of the plant pot can be from 90° to 150°, such as 95°, 100°, 110°, 120°, 130°, 140° or 150°. The angle between the side walls and the bottom of the plant pot can be from 90° to 94°, for instance 90°, 91°, 92°, 93°, 94°, preferably 92°. This produces a difference in size between the bottom and top surface of the plant pot. As a result, different plant pots can be easily stacked together and/or separated. An "airgap" may be found between the side walls of different plant pots stacked one upon another. In order to facilitate stacking of unused plant pots, stacking lugs may be provided on the underside and inner side of plant pot (see Fig. 1). The stacking lugs start preferably on the bottom of the plant pot. The stacking lugs may have a length ranging from 0.1 to 20 cm, preferably 5 cm, yet more preferably 3.1 cm. The stacking lugs may have a width ranging from 0.1 to 2 cm, preferably 1 cm, preferably 0.5 cm, yet more preferably 0.1 cm.

In certain embodiments, the plant pot is an ornamental pot for decoration purposes or a decorative plant pot. In certain embodiments, the plant pot is a growth pot for cultivating plants.

In certain embodiments, the plant pot comprises growth medium. In certain embodiments, the plant pot comprises a plant.

The term "plant medium", "plant growth medium", "growth medium" embraces solid medium which makes the growth and/or preservation of the plants independent of external solid media; only the addition of water and/or nutrients is needed. The term "solid medium" or "solid media" embraces "non-liquid medium" (media), which can easily retain its position in the plant pot and which can be added or removed, inter alia via shovel movements. Each plant species has its own preferred growth medium. A person skilled in the art can easily determine which plant growth medium to use for with species. The current application focuses mainly on a tray system for the growth and/or transport of plants sold in small retail, but the findings can easily also be adapted to the preferred growth condition(s) of each species. Within the context of the health consciousness of the consumer, when growing edible plants, a plant growth medium of biological origin may be used. The tray system as taught herein makes it possible to maintain the biological conditions not only from the start of the cultivation, but also during cultivation of the plants. Growth factors can be better controlled, so that pesticides no longer have to be used.

The tray system as taught herein can be used to grow and/or transport different kinds of plants; for example edible, inedible, straight growing, hanging plants, obliquely growing or upwardly growing plants. Inedible plants can be used, for example, in low dosage in medicine or for decoration. The total number of plants on earth is estimated in the order of 400.000 species. The concept can be easily adapted by a skilled person in the art for each existing plant species.

### Assembly

A further aspect provides an assembly comprising a tray system as described herein, and a plant pot as described herein, wherein the upper capillary part of the capillary element is inserted into the opening of the bottom of the plant pot, and the bottom of the plant pot rests on the supporting surface.

In certain embodiments, the kit of parts or assembly as taught herein further comprises a packaging. In certain embodiments, the kit of parts or assembly as taught herein further comprises general information and/or usage instructions for growing and/or transporting the plant.

Preferably, the packaging is transparent. The term "transparent" refers to the possibility of being able to look through it. It is thus easy for the grower and/or consumer to observe the tray system or assembly as taught herein comprising a plant inside the packaging. The transparent packaging is designed such that almost no condensation takes place on the inner side of the packaging, so that visualization of the plant is not prevented.

Logo, general information and/or usage instructions for the growth and/or the transport of the plants may be present on the packaging, peripheral wall and/or plant pot. The usage instructions can provide a simple overview in the form of a two-dimensional inscription, or in the form of a document which can be opened out or unfolded. The growth conditions of plants may be influenced by the soil variety, temperature, watering, etc. The usage instructions give the consumer preferably clear guidelines for the growing and treatment of the plants, for example suggestions can be given in connection with the watering, lighting, harvesting, and temperature during the growth of the plant.

The concept as taught herein allows the production of diverse tray systems. The concept is not limited by the different proposed dimensions as long as the tray system produced is a one-piece tray system as defined herein.

### Methods

A further aspect provides a method for growing and/or transporting plants, comprising the steps of:
- providing a tray system as described herein;
- providing a plant pot as described herein, the plant pot comprising a plant;
- placing the plant pot onto the tray system by inserting the upper capillary part through the opening of the plant pot, thereby forming an assembly; and
- growing and/or transporting the plant in the assembly.

The term "growing" refers to undergoing natural development by increasing in size and changing physically; for plants this term refers to an increase in vegetable material, such as leaves, blossom material and/or seed material.

With the term "transporting" is meant to carry, move, or convey from one place to another.

In certain embodiments, the method as described herein may further comprise the steps of:
- providing a plant pot as defined herein; optionally perforating the bottom of a plant pot to make openings corresponding to the position of the capillary elements of the tray system;
- filling the plant pot with growth medium; and
- adding the plant to the growth medium.

In certain embodiments, the method as described herein may further comprise the steps of:
- transporting the tray system or assembly as taught herein to the sale premises;
- storing the tray system or assembly as taught herein; and/or
- selling the tray system or assembly as taught herein to a middleman or consumer.

In certain embodiments, the step of inserting the plant pot onto the tray system as taught herein can take place:
- before or after filling the plant pot with growth medium;
- before or after adding the plant to the growth medium;
- before or after transporting the tray system;
- before or after storing the tray system; and/or
- before or after selling the tray system.

In certain embodiments, during the growth of the plants, additional liquid nutrients and/or water may be added by the grower, middleman or consumer.

In certain embodiments, the water may be added to the tray, below the supporting surface; preferably, reaching the mark present on the upstanding peripheral wall.

In certain embodiments, the following steps may be carried out automatically:
- perforating the bottom of a plant pot,
- filling the plant pot with growth medium,
- adding the plant to the growth medium,
- inserting the plant pot onto the tray system,
- transporting the tray system or the assembly, and/or
- storing the tray system or the assembly.

The tray system as taught herein allows the watering of the plants to be controlled in simple manner. Optimal water quantity can be dependent on the species and/or the growth stage of the plant. The relative humidity of the plant growth medium is influenced by for instance the numbers of capillary elements and/or the numbers of grooves.

Optimal temperature and light conditions depends on the requirements of the species of the plant, known by a skilled person in the art. During the growth and/or transport of the plants, the assembly can be kept at room temperature. If during transport, storage of the assembly is desired, then the optimal conditions for this can be applied. If during transport or storage, the growth of the plant is wanted to be arrested, the assembly can be cooled. Plants can be cooled at any time during their growth. In case of cooling during transport, an air-conditioned cooling container can be used.

### Use

An aspect relates to the use of a tray system as described herein for growing and/or transporting plants.

The tray system as taught herein allows to water plants in an easy and controlled way. Water is transmitted by capillary action from the tray (water reservoir) into the plant medium. Due to the capillary action, water is provided to the plant medium without a risk of over- or under-moistening of the plant medium. The costumer only needs to fill the tray and wait until the tray is (nearly) empty and ready to be refilled. In addition, depending on the amount of water added to the tray, once water added, plants can remain and grow unattended for instance for 7 to 10 days. In addition, evaporation from the tray system creates a humidified environment around the plant and indirectly humidifies the room. Consequently, the tray allows growing and flowering plants for a longer period.

In addition, the tray system as taught herein is handy, user friendly and ready-to-go. The one-piece tray system is designed to align all elements (tray, supporting element, capillary element) optimally to each other allowing optimal watering of the plant. The consumer can easily combine a plant pot with the tray system by inserting the upper capillary part in an opening of the plant pot. The tray system can be combined with any plant pot as long as the position of the upper capillary part(s) corresponds with the position of the opening(s) in the bottom of the plant pot. The plant pot is kept above the bottom of the tray by the supporting elements which can support the plant pot at any position of the bottom of the plant pot.

When using the assembly and in case the plant medium is present in a dehydrated condition, water may be added till the water level reaches above the supporting element. Water can then directly enter the openings of the plant pot, allowing a fast hydration of the plant medium. After recovery of the humidity within the plant medium, the capillary transfer of water from the tray system to the plant medium continues to keep the plant medium moist.

In addition, the present tray system allows the user to transport easily the assembly as taught herein. Different plant pots can be added to the tray system forming one assembly. Plant pots are fixed through insertion of the upper capillary parts through the openings in the bottom of the plant pots. Therefore, plant pots easily remain on their positions onto the tray, even if the transport is somewhat incautious or imprudent.

In addition, the present tray system and assembly can advantageously be used as a decorative element so that the present tray system and/or assembly can directly be used in-house. For instance, the assembly as taught herein may comprise an ornamental plant pot and tray. Alternatively, the present assembly may comprise a cultivation pot and an ornamental tray. In the latter case; the top surface of the peripheral wall will be preferably similar or higher than the top surface of the cultivation plant pot. The present tray systems and/or assemblies may easily be recycled and/or re-used.

In addition, the present tray system and/or assembly may be used directly in small and/or large retail. The present assembly can be decorative and compact; and it further allows an optimal packaging, presentation and transportation of plants. The present tray system and/or assembly can be wrapped easily resulting in a easy to produce and attractive sales item. Foil wrapping is preferred, but paper wrapping can also be used. The assembly can be easily wrapped in a foil with tape or in a foil bag by the small or the large retailer by hand or using automated systems. When wrapped in simple transparent foil, the assembly may be visible and not compressed by the packaging. Information and tips may be printed onto the packaging; and can thus easily be adapted when necessary (depending on the growth and transport conditions of the plants; language to be used). As a lot of space is available on the wrapping, a lot of information may be provided (maintenance tips, provider, product number, production date, quality guarantee) and large prints may be used. The assembly allows producing a good looking and uniform entity. In addition, as the tray system as taught herein comprises simple structures, the tray system can be easily made using for instance an automated setup. Not only the assembly can be easily transported; also the tray system and/or the plant pots as such can be transported separately and assembled when necessary by the retailer or the end-consumer. As the present tray and/or the assembly is easily made, easy to transport, and an attractive sales item, the assembly is well designed for e-commerce.

### EXAMPLES

### Example 1: Tray system and assembly according to an embodiment of the invention

In a first example, reference is made to Fig. 1A and 1B. Fig. 1A shows a one-piece tray system (10) according to an embodiment of the invention. The tray system (10) comprises a tray (100) with a bottom (101) and an upstanding peripheral wall (102). The tray system (10) further comprises capillary units (500). Each capillary element (500) is attached to the bottom on the inside (120) of the tray. As shown in Fig. 1B, each capillary unit (500) comprises four supporting elements (200) evenly distributed around and connected to one capillary element (300). Each supporting element (200) comprises a supporting surface (211) parallel to the bottom of the tray. The height of each supporting element (200) is less than the height of the peripheral wall (102). Each capillary element (300) comprises an upper capillary part (303) and a lower capillary part (309), the upper capillary part (303) extending above the supporting surface (211) and the lower capillary part (309) extending below the supporting surface (211). The capillary element (300) comprises four grooves (301) configured for capillary action from the lower capillary part (309) to the upper capillary part (303). Each groove (301) is a vertical groove extending along the longitudinal axis (A-A') of the capillary element (300). Each groove (301) extends from the bottom on the inside (120) of the tray to the top of the capillary element. Each groove (301) thus extends along 100% of the height of the capillary element (300). Each groove (301) is a cylindrical depression, and about 25% of the circumference of the depression opens to the surroundings. Each groove (301) comprises an opening (306) which extends along the longitudinal axis of the capillary element (300).
Fig. 1C and 1D show different views of an assembly (1000) illustrating an embodiment of the invention. As shown in Fig. 1C, the assembly (1000) comprises a tray system (10) and four plant pots (700). The tray system (10) comprises a tray (100) having a bottom (101) and an upstanding peripheral wall (102). The tray system (10) further comprises on the inner side (120) of the bottom of the tray capillary units (500). Each capillary unit (500) comprises 4 supporting elements (200) evenly distributed around and connected to one capillary element (300). The height of the capillary element (300) and its grooves (301) exceeds above the height of the supporting elements (200). The capillary units (500) are dispersed over the bottom (101) of the tray to receive the openings (701) present on the bottom (712) of a plant pot (700). Some of the capillary units (500) may make contact with a plant pot, while others may remain free. Each plant pot (700) has at the top a square-shaped opening with rounded corners capable of receiving plant medium and/or plant material. From the top opening, the sidewalls of the pot merge into a smaller round-shaped bottom (712). As shown in Fig. 1D, each plant pot (700) comprises 6 openings (701) in the bottom (712). Three of the openings (701) receive the upper capillary part (303) of the capillary element. The other openings (701) in the bottom (712) of the plant pot remain open. Four stacking lugs (702) are present on the inner side towards the bottom of the plant pot (700). A part of the circumference of each plant pot follows the circumference of the peripheral wall. When assembled, the plant pots are gathered in a compact and ordered way, so that the top of the plant pots are close to, but not touching, each other.

### Example 2: Assembly according to an embodiment of the present invention

Fig. 2 illustrates a section of part of an assembly (1001) according to an embodiment. The assembly (1001) comprises a tray system (11) and a plant pot (700). The tray system (11) comprises a tray (100), a supporting element (200) and a capillary element (300). The tray (100) comprises a bottom (101), an upstanding peripheral wall (102), and a mark (103) at the inside of said wall indicating the water and/or nutrients (600) level. The inner side (120) of the bottom of the tray comprises the supporting element (200) and the capillary element (300) as separate elements. Plant medium (750) and plant material (760) may be present in the plant pot (700). The plant pot (700) has a top surface (711) and a bottom (712). In the A-section of Fig. 2, the top and the bottom surfaces of the elements present in the assembly (1001) are indicated. The top surface (311) of the capillary element exceeds the top surface (111) of the peripheral wall and the supporting surface (211) of the supporting element. The supporting element (200) has a bottom surface (212). The top (313) and bottom (314) of the groove (301) may vary and may extend to the top (311) and/or the bottom surface (312) of the capillary element (300); variation is indicated by the dashed line. The bottom (712) of the plant pot makes contact with the supporting surface (211). In the B-section of the figure, the heights of the elements are indicated: height of the peripheral wall (110), height of the supporting element (210), height of the capillary element (310), height of the top of the groove (330), height of the bottom of the groove (340), and height of the plant pot (710). The height of an element is the distance between the top and bottom surface of the element, unless indicated otherwise. The difference in height (320) between the supporting surface (211) and the capillary element defines the upper capillary part (303). The remainder of the capillary element is the lower capillary part (not indicated). In other words, the difference in height (210) between the inner side (120) of the bottom of the tray and the supporting surface (211) defines the lower capillary part. A clickable element (302) is present on the basis of the upper capillary part (303).

### Example 3: Capillary units according to embodiments of the present invention

Fig. 3A illustrates a longitudinal cross-section of a capillary unit (500) comprising two supporting elements connected to a central capillary element to form one physical structure. The capillary unit (500) is attached to the bottom (101) on the inside of a tray according to an embodiment. Two clickable elements (302) are present on the basis of the upper capillary part (303). A plant pot (not shown) can be easily clicked over the clickable elements so that the bottom of the plant pot rests on the supporting surfaces and stays tightly connected with the tray system. In Fig. 3A, the groove (301) of the capillary element is a rectangular slit and extends along 100% of the height of the capillary element. XY situates the cross section shown in Fig. 3B. As illustrated in Fig. 3B, the capillary element (300) comprises a groove (301), which is a rectangular slit through the body (304) of the capillary element, and two clickable elements (302). The slit extends to the outer surface (305) of the capillary element, thereby creating two longitudinal openings (306) along the body (304) of the capillary element. Fig. 3C illustrates a cross section of the upper capillary part (303) of a capillary element according to an embodiment with a groove (301) comprising two rectangular slits that intersect in the middle (308) of the body (304) of the capillary element. The slits extend to the outer surface (305) of the capillary element, thereby creating four longitudinal openings (306) along the body (304) of the capillary element. The openings (306) connect the middle (308) of the capillary element with the surroundings. Fig. 3D illustrates a cross section of the upper capillary part (303) of a capillary element according to an embodiment with a groove (301) comprising four longitudinal depressions (306) along the outer surface (305) of the capillary element; each depression (306) runs parallel along the longitudinal axis of the body (304) of the capillary element. The depressions are cylindrical. Fig. 3E illustrates a cross section of the upper capillary part (303) of a capillary element according to an embodiment. The upper capillary part comprises a groove (301) which is a cylindrical tube though the middle (308) of the body (304) of the capillary element and a slit connecting the cylindrical tube with the surroundings of the capillary element. The slit introduces an opening (306) at the outer surface (305) of the capillary element. In the figure, the clickable elements (302) are positioned on the capillary element in between the openings (306) of the grooves. Each groove has an opening (306) to the surroundings and inner surface (307).

### Example 4: Use of a tray system according to an embodiment of the present invention

A tray system (10) as illustrated in Fig. 1 has been made in polycarbonate material. Capillary units (500) were present at the inner side (120) of the bottom of the tray so that, at a later stage, particular plant pots (700) could be combined with the tray system (10). In order to determine the positioning of said capillary units (500), the positions of the openings (701) present in the bottom of the plant pots have been studied. Additional capillary units (500) were positioned in order to make the tray system (10) universal, allowing the combination with plant pots having openings in the bottom (701) with positions other than the plant pots (700) to be used in first instance. Malls for the production of the tray have been made and the tray system (10) was produced.

The tray system (10) made comprised different elements with dimensions indicated below. However, as indicated before, the present invention is not limited by the proposed dimensions. The tray system (10) made comprised a tray (100) having a width and depth of 210 mm; the thickness of the bottom being 1 mm. The peripheral wall (102) of the tray had a thickness of 1 mm and a height of 30 mm. Each of the capillary units (500) comprised a capillary element having a cylindrical structure with a height of 35 mm and at the upper capillary part (303) a diameter of 5 mm and four cylindrical depressions (301) each with a height of 35 mm and a diameter of 1 mm, 25% of the circumference of the depression (301) opened to the surroundings along the longitudinal axis (A-A') of the capillary element. The depressions also opened to the surroundings at the top of the capillary element. Each of the capillary units (500) further comprised four supporting elements arranged in a cross-shaped manner around the capillary element. Each of the supporting element had a multifaceted shape with a height of 25 mm, a width of 2 mm and a depth (length) of 3 mm; the short side of the supporting element connecting to the capillary element. An assembly (1000) of the tray system (10) with four plant pots (700) has been made using plant pots (700) having a diameter at the top surface (711) of 10 cm, the bottom (712) of the plant pots having round openings (701) with a diameter of 6 mm. The upper capillary parts (303) of the capillary elements were inserted into the openings (701) of the bottom surface of the plant pot till the bottom (712) of the plant pot rested onto the supporting surface (211) of the supporting element. Universal plant medium (750) was added to the plant pots (700) and small rose bushes (760) were planted in each of the plant pots (700).

Water (600) was added to the tray system (10) up to 15 mm in the tray (100). Water (600) was transmitted in a controlled way by capillary action through the grooves (301) of the capillary unit from the lower capillary part (309) to the upper capillary part (303), e.g. thereby transporting water from the bottom (120) of the tray to the plant medium (750).

The one-piece tray system (10) allowed watering of the rose bushes in an easy and controlled way. The rose bushes could grow unattended for 7-10 days. The rose bushes were held for a long time in the assembly (1000), water (600) only needed to be added sporadic when the tray (100) was nearly empty. The rose bushes (760) grew and flourished at expected rate and periods. The assembly (1000) was transported under different conditions. During transport it was observed that the plant pots (700) were kept stably onto the tray system (10). The assembly (10) made could be easily disassembled when needed.

In a parallel setup, an assembly has been tested using a similar tray system but comprising capillary units having clickable elements. In this embodiment, the upper capillary part comprised four clickable elements with round knob structure and a diameter of 1 mm. The clickable elements were positioned 2 mm above the surface of the supporting element so that the plant pots with a bottom of 1 mm could easily be clicked and fixed onto the capillary unit. When testing the assembly during transport, it was observed that the plant pots were kept sturdy onto the tray system, even at very harsh conditions.

## Claims

1. A one-piece tray system (10) for growing and/or transporting plants, comprising:
- a tray (100) comprising a bottom (101) and an upstanding peripheral wall (102);
- a supporting element (200) attached to the bottom (101) on the inside (120) of the tray (10), the supporting element (200) comprising a supporting surface (211) parallel to the bottom (101) of the tray (100), wherein the height of the supporting element (200) is less than the height of the peripheral wall (102); and
- a capillary element (300) attached to the bottom (101) on the inside (120) of the tray (10), the capillary element (300) comprising an upper capillary part (303) and a lower capillary part (309), the upper capillary part (303) extending above the supporting surface (211) and the lower capillary part (309) extending below the supporting surface (211), wherein the capillary element (300) comprises a groove (301) configured for capillary action from the lower capillary part (309) to the upper capillary part (303).

2. The tray system according to claim 1, wherein the upper capillary part (303) comprises a clickable element (302).

3. The tray system according to claim 1 or 2, wherein the height of the supporting element (200) is at least 1 mm less than the height of the peripheral wall (102).

4. The tray system according to any of claims 1 to 3, wherein the height of the upper capillary part (303) is at least 3 mm.

5. The tray system according to any of claims 1 to 4, wherein the supporting element (200) is positioned perpendicular to the bottom (101) of the tray (10) and/or the capillary element (300) is positioned perpendicular to the bottom (101) of the tray (10).

6. The tray system according to any of claims 1 to 5, wherein the groove (301) extends:
- along the longitudinal axis (A-A') of the capillary element (300);
- from the lower capillary part (309) to the upper capillary part (303);
- from the bottom (101) on the inside (120) of the tray (10) to the upper capillary part (303), and/or
- from the lower capillary part (309) to the upper capillary part (303) along at least 80%, along at least 90%, or along 100% of the height of the capillary element (300).

7. The tray system according to any of claims 1 to 6, wherein the groove (301) is vertical.

8. The tray system according to any of claims 1 to 7, wherein the groove (301) is:
- a slit, preferably wherein the slit is rectangular and has a width of 0.5 mm to 2.3 mm;
- a tube, preferably wherein the tube is cylindrical and has a diameter of 0.5 mm to 2.3 mm; and/or
- a depression, preferably wherein the depression is cylindrical and has a diameter of 0.5 to 2.3 mm, optionally wherein at least 5% of the circumference of the depression opens to the surroundings.

9. The tray system according to any of claims 1 to 8, wherein the supporting element (200) and the capillary element (300) are part of one capillary unit (500) or are separate elements; preferably wherein the supporting element (200) and the capillary element (300) are part of one capillary unit (500).

10. The tray system according to any of claims 1 to 9, wherein the tray system (10) is made from a non-porous material; preferably wherein the non-porous material is chosen from the group consisting of plastic, metal, polymer, and composite material.

11. A kit of parts comprising a tray system according to any of claims 1 to 10, and a plant pot (700) comprising a bottom (712) having an opening (701), wherein the opening (701) of the plant pot (700) is configured for receiving the upper capillary part (303).

12. An assembly (1000) comprising a tray system (10) as defined in any one of claims 1 to 10, and a plant pot (700) as defined in claim 11, wherein the upper capillary part (303) is inserted into the opening (701) of the plant pot (700), and the bottom (712) of the plant pot (700) rests on the supporting surface (211).

13. The kit of parts according to claim 11, or the assembly according to claim 12, wherein:
- the plant pot (700) is an ornamental pot for decoration purposes;
- the plant pot (700) is a growth pot for cultivating plants;
- the plant pot (700) comprises growth medium (750);
- the plant pot (700) comprises a plant (760);
- the kit of parts or the assembly further comprises a packaging; and/or
- the kit of parts or the assembly further comprises general information and/or usage instructions for growing and/or transporting the plant (760).

14. A method for growing and/or transporting a plant, comprising the steps of:
- providing a tray system (10) as defined in any one of claims 1 to 10;
- providing a plant pot (700) as defined in any one of claims 11 to 13, the plant pot (700) comprising a plant (760);
- placing the plant pot (700) onto the tray system (10) by inserting the upper capillary part (303) through the opening (701) of the plant pot (700); and
- growing and/or transporting the plant (760).

15. Use of a tray system (10) according to any of claims 1 to 10, for growing and/or transporting plants (760).

## Patentansprüche

1. Einteiliges Schalensystem (10) zum Züchten und/oder Transportieren von Pflanzen, umfassend:
- eine Schale (100) mit einem Boden (101) und einer aufrechten Umfangswand (102);
- ein Stützelement (200), das am Boden (101) auf der Innenseite (120) der Schale (10) befestigt ist, wobei das Stützelement (200) eine zum Boden (101) der Schale (100) parallele Stützfläche (211) umfasst, wobei die Höhe des Stützelements (200) geringer als die Höhe der Umfangswand (102) ist; und
- ein Kapillarelement (300), das am Boden (101) auf der Innenseite (120) der Schale (10) befestigt ist, wobei das Kapillarelement (300) einen oberen Kapillarteil (303) und einen unteren Kapillarteil (309) umfasst, wobei sich der obere Kapillarteil (303) oberhalb der Stützfläche (211) erstreckt und sich der untere Kapillarteil (309) unterhalb der Stützfläche (211) erstreckt, wobei das Kapillarelement (300) eine Nut (301) umfasst, die für eine Kapillarwirkung vom unteren Kapillarteil (309) zum oberen Kapillarteil (303) konfiguriert ist.

2. Schalensystem nach Anspruch 1, wobei der obere Kapillarteil (303) ein klickbares Element (302) umfasst.

3. Schalensystem nach Anspruch 1 oder 2, wobei die Höhe des Stützelements (200) um mindestens 1 mm geringer als die Höhe der Umfangswand (102) ist.

4. Schalensystem nach einem der Ansprüche 1 bis 3, wobei die Höhe des oberen Kapillarteils (303) mindestens 3 mm beträgt.

5. Schalensystem nach einem der Ansprüche 1 bis 4, wobei das Stützelement (200) senkrecht zum Boden (101) der Schale (10) positioniert ist und/oder das Kapillarelement (300) senkrecht zum Boden (101) der Schale (10) positioniert ist.

6. Schalensystem nach einem der Ansprüche 1 bis 5, wobei sich die Nut (301) wie folgt erstreckt:
- entlang der Längsachse (A-A') des Kapillarelements (300);
- vom unteren Kapillarteil (309) zum oberen Kapillarteil (303);
- vom Boden (101) auf der Innenseite (120) der Schale (10) zum oberen Kapillarteil (303) und/oder
- vom unteren Kapillarteil (309) zum oberen Kapillarteil (303) über mindestens 80 %, über mindestens 90 % oder über 100 % der Höhe des Kapillarelements (300).

7. Schalensystem nach einem der Ansprüche 1 bis 6, wobei die Nut (301) vertikal ist.

8. Schalensystem nach einem der Ansprüche 1 bis 7, wobei die Nut (301):
- ein Schlitz ist, wobei der Schlitz vorzugsweise rechteckig ist und eine Breite von 0,5 mm bis 2,3 mm aufweist;
- ein Rohr ist, wobei das Rohr vorzugsweise zylindrisch ist und einen Durchmesser von 0,5 mm bis 2,3 mm aufweist; und/oder
- eine Vertiefung ist, wobei die Vertiefung vorzugsweise zylindrisch ist und einen Durchmesser von 0,5 bis 2,3 mm aufweist, wobei sich optional mindestens 5 % des Umfangs der Vertiefung zur Umgebung hin öffnen.

9. Schalensystem nach einem der Ansprüche 1 bis 8, wobei das Stützelement (200) und das Kapillarelement (300) Teil einer Kapillareinheit (500) sind oder separate Elemente sind; wobei vorzugsweise das Stützelement (200) und das Kapillarelement (300) Teil einer Kapillareinheit (500) sind.

10. Schalensystem nach einem der Ansprüche 1 bis 9, wobei das Schalensystem (10) aus einem nichtporösen Material gefertigt ist; wobei das nichtporöse Material vorzugsweise aus der Gruppe ausgewählt ist, die aus Kunststoff, Metall, Polymer und Verbundmaterial besteht.

11. Teilesatz, umfassend ein Schalensystem nach einem der Ansprüche 1 bis 10 und einen Pflanztopf (700), der einen Boden (712) mit einer Öffnung (701) aufweist, wobei die Öffnung (701) des Pflanztopfs (700) konfiguriert ist, um den oberen Kapillarteil (303) aufzunehmen.

12. Anordnung (1000), umfassend ein Schalensystem (10) nach einem der Ansprüche 1 bis 10 und einen Pflanztopf (700) nach Anspruch 11, wobei der obere Kapillarteil (303) in die Öffnung (701) des Pflanztopfs (700) eingesetzt ist und der Boden (712) des Pflanztopfs (700) auf der Stützfläche (211) aufliegt.

13. Teilesatz nach Anspruch 11 oder Anordnung nach Anspruch 12, wobei:
- der Pflanztopf (700) ein Ziertopf für Dekorationszwecke ist;
- der Pflanztopf (700) ein Wachstumstopf für den Anbau von Pflanzen ist;
- der Pflanztopf (700) ein Wachstumsmedium (750) umfasst;
- der Pflanztopf (700) eine Pflanze (760) umfasst;
- der Teilesatz bzw. die Anordnung ferner eine Verpackung umfasst und/oder
- der Teilesatz bzw. die Anordnung ferner allgemeine Informationen und/oder Gebrauchsanweisungen zum Züchten und/oder Transportieren der Pflanze (760) umfasst.

14. Verfahren zum Züchten und/oder Transportieren einer Pflanze, umfassend die folgenden Schritte:
- Bereitstellen eines Schalensystems (10) nach einem der Ansprüche 1 bis 10;
- Bereitstellen eines Pflanztopfs (700) nach einem der Ansprüche 11 bis 13, wobei der Pflanztopf (700) eine Pflanze (760) umfasst;
- Anordnen des Pflanztopfs (700) auf dem Schalensystem (10) durch Einsetzen des oberen Kapillarteils (303) durch die Öffnung (701) des Pflanztopfs (700) und
- Züchten und/oder Transportieren der Pflanze (760).

15. Verwendung eines Schalensystems (10) nach einem der Ansprüche 1 bis 10 zum Züchten und/oder Transportieren von Pflanzen (760).

## Revendications

1. Système à plateau d'une seule pièce (10) pour la culture et/ou le transport de plantes, comprenant :
un plateau (100) comprenant un fond (101) et une paroi périphérique (102) surélevée ;
un élément de support (200) fixé au fond (101) sur l'intérieur (120) du plateau (10), l'élément de support (200) comprenant une surface de support (211) parallèle au fond (101) du plateau (100), la hauteur de l'élément de support (200) étant inférieure à la hauteur de la paroi périphérique (102) ; et
un élément capillaire (300) fixé au fond (101) sur l'intérieur (120) du plateau (10), l'élément capillaire (300) comprenant une partie capillaire supérieure (303) et une partie capillaire inférieure (309), la partie capillaire supérieure (303) s'étendant au-dessus de la surface de support (211) et la partie capillaire inférieure (309) s'étendant en dessous de la surface de support (211), l'élément capillaire (300) comprenant une rainure (301) conçue pour une action capillaire de la partie capillaire inférieure (309) à la partie capillaire supérieure (303).

2. Système à plateau selon la revendication 1, la partie capillaire supérieure (303) comprenant un élément cliquable (302).

3. Système à plateau selon la revendication 1 ou 2, la hauteur de l'élément de support (200) étant inférieure d'au moins 1 mm à la hauteur de la paroi périphérique (102).

4. Système à plateau selon l'une quelconque des revendications 1 à 3, la hauteur de la partie capillaire supérieure (303) étant d'au moins 3 mm.

5. Système à plateau selon l'une quelconque des revendications 1 à 4, l'élément de support (200) étant placé perpendiculairement au fond (101) du plateau (10) et/ou l'élément capillaire (300) étant placé perpendiculairement au fond (101) du plateau (10).

6. Système à plateau selon l'une quelconque des revendications 1 à 5, la rainure (301) s'étendant :
le long de l'axe longitudinal (A-A') de l'élément capillaire (300) ;
de la partie capillaire inférieure (309) à la partie capillaire supérieure (303) ;
du fond (101) sur l'intérieur (120) du plateau (10) à la partie capillaire supérieure (303), et/ou
de la partie capillaire inférieure (309) à la partie capillaire supérieure (303) le long d'au moins 80 %, le long d'au moins 90 % ou le long de 100 % de la hauteur de l'élément capillaire (300).

7. Système à plateau selon l'une quelconque des revendications 1 à 6, la rainure (301) étant verticale.

8. Système à plateau selon l'une quelconque des revendications 1 à 7, la rainure (301) étant :
une fente, de préférence la fente étant rectangulaire et ayant une largeur comprise entre 0,5 mm et 2,3 mm ;
un tube, de préférence le tube étant cylindrique et ayant un diamètre compris entre 0,5 mm et 2,3 mm ; et/ou
une dépression, de préférence la dépression étant cylindrique et ayant un diamètre compris entre 0,5 et 2,3 mm, éventuellement au moins 5 % de la circonférence de la dépression s'ouvrant sur l'environnement.

9. Système à plateau selon l'une quelconque des revendications 1 à 8, l'élément de support (200) et l'élément capillaire (300) faisant partie d'une unité capillaire (500) ou étant des éléments séparés ; de préférence l'élément de support (200) et l'élément capillaire (300) faisant partie d'une unité capillaire (500) .

10. Système à plateau selon l'une quelconque des revendications 1 à 9, le système à plateau (10) étant fabriqué à partir d'un matériau non poreux ; de préférence le matériau non poreux étant choisi dans le groupe comprenant plastique, métal, polymère et matériau composite.

11. Kit de pièces comprenant un système à plateau selon l'une quelconque des revendications 1 à 10, et un pot à plante (700) comprenant une partie inférieure (712) ayant une ouverture (701), l'ouverture (701) du pot à plante (700) étant conçue pour recevoir la partie capillaire supérieure (303).

12. Ensemble (1000) comprenant un système à plateau (10) selon l'une quelconque des revendications 1 à 10, et un pot à plante (700) selon la revendication 11, la partie capillaire supérieure (303) étant insérée dans l'ouverture (701) du pot à plante (700), et la partie inférieure (712) du pot à plante (700) reposant sur la surface de support (211).

13. Kit de pièces selon la revendication 11, ou ensemble selon la revendication 12 :
le pot à plante (700) étant un pot d'ornement destiné à la décoration ;
le pot à plante (700) étant un pot de culture pour cultiver des plantes ;
le pot à plante (700) comprenant un milieu de croissance (750) ;
le pot à plante (700) comprenant une plante (760) ;
le kit de pièces ou l'ensemble comprenant en outre un emballage ; et/ou
le kit de pièces ou l'ensemble comprenant en outre des informations générales et/ou des instructions d'utilisation pour la culture et/ou le transport de la plante (760).

14. Procédé destiné à la culture et/ou au transport d'une plante, comprenant les étapes consistant à :
fournir un système à plateau (10) selon l'une quelconque des revendications 1 à 10 ;
fournir un pot à plante (700) selon l'une quelconque des revendications 11 à 13, le pot à plante (700) comprenant une plante (760) ;
placer le pot à plante (700) sur le système à plateau (10) en insérant la partie capillaire supérieure (303) à travers l'ouverture (701) du pot à plante (700) ; et
cultiver et/ou transporter la plante (760).

15. Utilisation d'un système à plateau (10) selon l'une quelconque des revendications 1 à 10, pour la culture et/ou le transport de plantes (760).
